# EUROPEAN PATENT APPLICATION

(11) **EP 3 816 029 A1**
(43) Date of publication of application: **05.05.2021**
(21) Application number: 20204542.3
(22) Date of filing: 29.10.2020
(51) Int. Cl.: B62K 5/10, B62J 45/41

(54) **THREE- OR MORE-WHEELED TILTING VEHICLE WITH HYDRAULIC TILTING SYSTEM AND WITH TILTING BLOCKING SYSTEM**

(30) Priority: 31.10.2019 IT 201900020182
(71) Applicant: Qooder S.A., 6833 Vacallo (CH)
(72) Inventor: MORONI, Marco, I-21055 GORLA MINORE (Varese) (IT); LIGUORI, Michelangelo, I-22100 COMO (IT)
(74) Representative: Savoca, Agatino

(57) **Abstract**

The oscillating system comprises a pair of hydraulic cylinders (10a, 10b), a connection duct (12) connecting the respective working chambers of the hydraulic cylinders (10a, 10b) to each other and a locking valve (14) arranged along the connection duct (12) and switchable between an open position, in which it allows the flow of a working fluid through the connection duct (12) between the hydraulic cylinders (10a, 10b), thus allowing the vehicle tilting, and a closed position, in which it prevents the flow of the working fluid between the hydraulic cylinders (10a, 10b), thereby preventing the vehicle from oscillating. The oscillating system further comprises a motorized actuation device with an electric motor (16) operatively connected to the locking valve (14) to command its switching between the open position and the closed position, an electronic control unit (ECU) suitable to drive the electric motor (16) according to predetermined control logics, and a control member (20) operable by the driver to supply the electronic control unit (ECU) with a control signal indicative of the will of the driver of the vehicle to block or unlock the vehicle swing.

## Description

The present invention generally relates to a tilting vehicle with three or more wheels, i.e. a vehicle comprising a pair of wheels side by side at the front, as well as a possible further pair of wheels side by side at the rear, and a tilting system designed for allowing the vehicle to tilt, in particular during a curve, in a similar way to what happens with traditional motorcycles.

More specifically, the present invention relates to a three- or more wheeled tilting vehicle provided with a hydraulic tilting system, and more precisely a tilting system comprising, for each pair of oscillating wheels, a pair of hydraulic cylinders each associated with a respective wheel, in which respective working chambers of each pair of hydraulic cylinders are connected by means of a respective connection duct so as to allow the passage of working fluid (typically oil) from one chamber to another. In the case of a three-wheeled tilting vehicle (two front and one rear), only one pair of hydraulic cylinders associated with the two front wheels and connected to each other by means of a connection duct will be provided, while in the case of a four-wheeled tilting vehicle (two front and two rear) there will be two pairs of hydraulic cylinders, one at the front and the other at the rear of the vehicle, and the hydraulic cylinders of each pair will be connected to each other via a respective connection duct.

Examples of vehicles of this type are the four-wheeled vehicle Qooder and the three-wheeled vehicle QV3, both marketed by the Applicant.

In a tilting vehicle with three or more wheels equipped with a hydraulic tilting system or of the type specified above, the use of a locking system that can be activated by the driver is known to block the tilting of the vehicle in the event of a stop, and therefore to allow keeping the vehicle in a stable parking position without the need to use the classic stand, as is the case with motorcycles.

This known locking system comprises a locking valve, which is arranged along the connecting duct that connects the hydraulic cylinders to each other and can be switched between an open position, in which it allows the flow of the working fluid through the connection duct between one hydraulic cylinder and the other, and a closed position, in which it prevents the flow of the working fluid through the connection duct, and a control element through which the driver can manually move the locking valve from the open position to the closed position or vice versa.

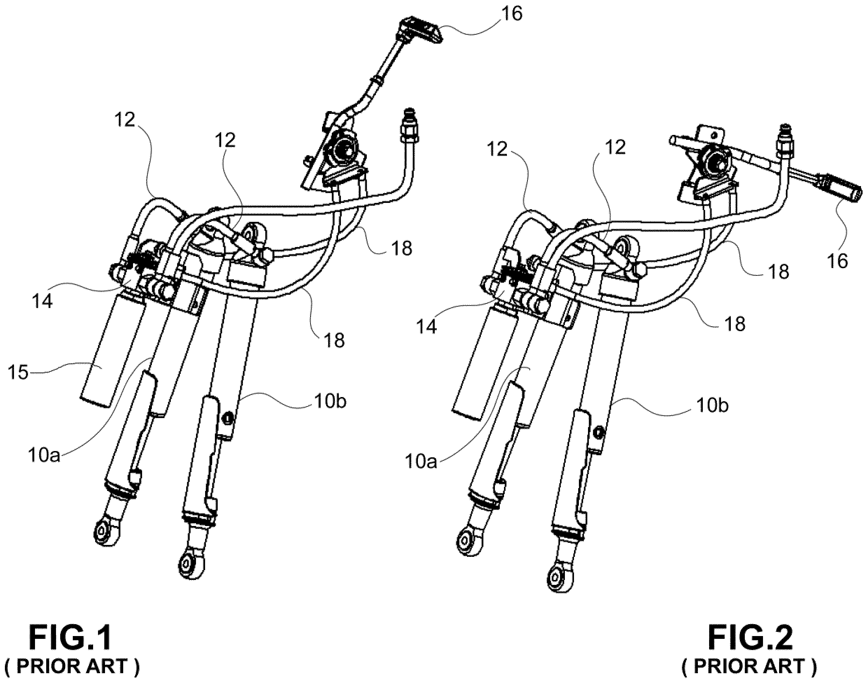

Figures 1 and 2 of the attached drawings show an example of an embodiment of such a locking system, respectively in the free tilting condition and in the locked tilting condition. In these figures, 10a and 10b indicate the two hydraulic cylinders, respectively right and left, of the hydraulic tilting system of a tilting vehicle, 12 indicates the connection duct which puts in fluid communication respective working chambers with each other (in this case the upper working chambers) of the two hydraulic cylinders 10a and 10b, and 14 indicates the blocking valve arranged along the connection duct 12 to allow or prevent the working fluid to flow along such conduit.

The control member, indicated with 16, is formed in this case by a lever which, by means of a pair of control cables 18, controls the movement of the locking valve 14 between the aforementioned open and closed positions. In particular, with the lever 16 in the raised position (as shown in figure 1) the locking valve 14 is in the open position, in which it allows the flow of the working fluid along the connection duct 12 and therefore allows the vehicle to tilt, while with the lever 16 in the lowered position (as shown in Figure 2) the locking valve 14 is in the closed position, in which it blocks the flow of the working fluid along the connection duct 12 and therefore prevents the vehicle from tilting. If the driver wishes to park the vehicle, all he/she has to do is moving the lever 16 to the lowered position, so as to block the vehicle from swinging and thus keep the vehicle stably in the parking position.

This known locking system, however, has the disadvantage of being usable only for prolonged parking over time, but not for short stops, such as for example at traffic lights, during which the driver must therefore place his feet on the ground to keep the vehicle stable.

A further example of a tilting control system for a vehicle is known from EP 3 434 570 A1.

Such system comprises in turn a pair of hydraulic cylinders connected by means of a duct on which a locking valve is arranged, which can be switched between an open position, in which a flow of fluid is allowed between the two cylinders (so as to allow the vehicle to tilt), and a closed position in which the passage of fluid between the two cylinders is prevented (so as to prevent the tilting of the vehicle).

However, in such a configuration, the tilting locking system is independent from the vehicle pitching system, which therefore requires a separate system.

The object of the present invention is to provide a locking system for locking the tilting motion of a three- or four-wheeled tilting vehicle equipped with a hydraulic tilting system, which is simple, safe and economical and which can be activated by the driver easily and quickly, thus allowing the locking of the tilting of the vehicle even in case of short stops, such as for example at traffic lights.

A further object of the present invention is to provide an efficient system for controlling the tilting and pitching motions of the vehicle.

This and other purposes are fully achieved according to the invention thanks to a hydraulic tilting system as defined in the attached independent claim 1.

Advantageous embodiments of the invention are specified in the dependent claims, the content of which is to be understood as an integral part of the following description.

In summary, the invention is based on the idea of using a three-way locking valve, designed to convey the flow of fluid from a hydraulic cylinder to the second cylinder (so as to adjust the tilting motion of the vehicle) and/or to an auxiliary reservoir (so as to adjust the vehicle's suspension motion), and a motorized actuation device comprising:
an electric motor operatively connected to the locking valve to control the switching thereof between the open position and the closed position,
an electronic control unit adapted to drive the motor according to predetermined control logics, and
a control member operable by the driver to supply the electronic control unit with a control signal indicative of the driver's will to block or unblock the tilting of the vehicle.

The electronic control unit is advantageously arranged to check, upon receipt of the command signal provided by the driver via the control member, predetermined operating parameters of the vehicle (such as for example the speed of the vehicle, the degree of opening of the accelerator, etc..), to determine whether the conditions exist to safely lock or unlock the vehicle's tilting and, if so, to drive the engine so as to command the switching of the locking valve from the open position to the closed position or, respectively, from closed position to open position. The electronic control unit is also advantageously arranged to command the switching of the locking valve in such a way as to make the working fluid to flow (partly or entirely) from the cylinders to an auxiliary tank, hydraulically connected to the connection duct.

Thanks to such an actuation device, the driver is able to command the locking and unlocking of the tilting in a very simple and fast way, and therefore to block the tilting even in the case of short stops, such as for example traffic lights.

Furthermore, such an actuation device allows automatic control of the release of the tilting, i.e. the movement of the locking valve from the closed position to the open position, at each restart of the vehicle, based for example on the information relating to the degree of throttle opening, without therefore requiring the operator to send a command signal via the control element (for example by pressing a specific button).

Further characteristics and advantages of the present invention will clearly emerge from the detailed description that follows, given purely by way of non-limiting example with reference to the attached drawings, in which:
Figures 1 and 2 are perspective views of a hydraulic tilting system for a three- or more-wheeled tilting vehicle according to the prior art, respectively in the free tilting condition and in the locked tilting condition;
Figure 3 is a perspective view of a hydraulic swinging system for a three- or more-wheeled tilting vehicle, according to an embodiment of the present invention; and
Figure 4 is a perspective view of a hydraulic oscillating system for a three- or more-wheeled tilting vehicle, according to a further embodiment of the present invention.

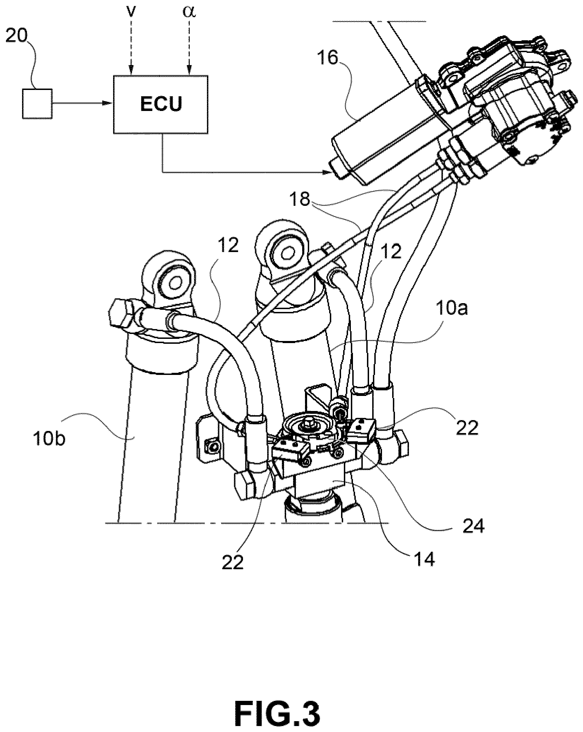

With reference initially to Figure 3, where identical parts and elements corresponding to those of Figures 1 and 2 are identified with the same reference numbers, a hydraulic tilting system for a three- or more-wheeled tilting vehicle comprises, in a per se known manner, a pair of hydraulic cylinders 10a and 10b, respectively right and left, each interposed between a respective front wheel of the vehicle, or better between a suspension arm of a respective front wheel of the vehicle, and the body of the vehicle.

Figure 3 shows neither the body of the vehicle nor the front wheels with the related mechanical suspension members, as these parts of the vehicle are known per se.

Furthermore, even if figure 3 shows only the hydraulic cylinders associated with the two front wheels of the vehicle, it is understood that in the case of a four-wheeled vehicle, in which the hydraulic tilting system comprises an additional pair of hydraulic cylinders associated with the rear wheels of the vehicle, everything described and illustrated herein with reference to the hydraulic cylinders associated with the front wheels of the vehicle is equally applicable to the hydraulic cylinders associated with the rear wheels of the vehicle.

Again with reference to Figure 3, the respective working chambers (in this case the upper working chambers) of the two hydraulic cylinders 10a and 10b are connected to each other by means of a connection duct 12, through which the working fluid (for example oil) contained in these chambers can flow from one chamber to another to allow the vehicle to swing. A locking valve 14, provided as a three-way ball valve, is arranged along the connection duct 12 and can be switched between an open position and a closed position in which, respectively, it allows and prevents the flow of the working fluid through the connection duct 12. The locking valve 14 is also configured to divert all or part of the flow of the working fluid from one of the hydraulic cylinders 10a, 10b towards an auxiliary tank 15, instead of towards the other of the hydraulic cylinders 10a, 10b. In this way, it is possible with a single valve to adjust the tilting and pitching motions of the vehicle. Furthermore, according to an embodiment, the auxiliary tank 15 can be pressurized.

The switching of the locking valve 14 between the open position and the closed position is controlled by a motorized actuation device, which according to this embodiment comprises an electric motor 16 (or better, an electric motor and reduction unit) and a pair of control cables 18 by means of which the electric motor 16 acts on the locking valve 14. By controlling the electric motor 16 in one direction or the other, by means of the control cables 18, the switching of the locking valve 14 from the open position to closed position or, vice versa, from closed position to open position is obtained.

The electric motor 16 is piloted by an electronic control unit ECU which receives at its input a command signal from a control member 20 (schematically shown in Figure 3) which can be operated by the driver. The electronic control unit ECU also receives at its input information relating to certain operating parameters of the vehicle (such as the vehicle speed v, the degree of throttle opening α, etc.) and, on the basis of this information, is set to determine whether the conditions are in place to safely lock or unlock the vehicle's swing.

If, therefore, having received a command signal from the control member 20 the electronic control unit ECU determines that it is possible to safely lock or unlock the vehicle's tilting, it consequently drives the electric motor 16 so as to cause the switching of the locking valve 14 respectively from the open position to the closed position or from the closed position to the open position.

The electronic control unit ECU can also advantageously arranged to command the switching of the locking valve 14 in such a way as to make the working fluid to flow (partly or entirely) from the cylinders 10a, 10b to the auxiliary tank 15, hydraulically connected to the connection duct 12.

For example, the control member 20 can be a button, located on the handlebar or in another position of the vehicle easily accessible by the driver, in which case the system is configured in such a way that when the locking valve 14 is in the closed position, i.e. when the vehicle tilting is prevented, pressing the button commands the movement of the locking valve 14 to the open position, and therefore the unlocking of the vehicle tilting, while when the locking valve 14 is in the open position, i.e. when the vehicle tilting is allowed, pressing the button commands the movement of the locking valve 14 to the closed position, and therefore the locking of the vehicle tilting.

Alternatively, the control member 20 can be a switch that is switchable between two operating positions, corresponding respectively to the locking condition of the vehicle tilting and the unlocking condition of the vehicle tilting.

In any case, the actuation of the control member 20 does not automatically determine the switching of the locking valve 14, but it is the electronic control unit ECU which establishes whether the locking valve 14 can be switched and, if so, to drive the electric motor 16 appropriately. For example, if the driver operates the control member 20 to block the vehicle's tilting when the vehicle is traveling at a speed higher than a given first threshold value, the electronic control unit ECU does not allow switching of the locking valve 14 to the closed position. Furthermore, when the parking brake of the vehicle is active, the electronic control unit ECU inhibits the switching of the locking valve 14 from the closed position to the open position so as to prevent the unlocking of the tilting of the vehicle.

Furthermore, the electronic control unit ECU is preferably configured to automatically unlock the vehicle's tilting, independently of the driver's actuation of the control member 20, at each restart of the vehicle. If, therefore, starting for example from a traffic light stop condition the vehicle restarts, as soon as the vehicle speed exceeds a given second threshold value (which can be equal to or different from the aforementioned first threshold value) the electronic control unit ECU commands the switching of the locking valve 14 to the open position to allow the vehicle to swing.

Of course, further and/or of different operating logics can be implemented in the electronic control unit ECU.

Preferably, sensor means suitable for detecting the open or closed position of the valve and for sending a corresponding signal to the electronic control unit ECU are associated with the locking valve 14. For example, such sensor means may comprise a pair of microswitches 22 which can be operated by a cam 24 which is connected in a rotationally integral way with the rotating shutter (ball) of the locking valve 14, so that when the locking valve 14 assumes the closed position the cam 24 switches the microswitch 22 associated with this position, thus causing a corresponding valve closed signal to be sent to the electronic control unit ECU, while when the locking valve 14 assumes the open position the cam 24 switches the microswitch 22 associated with this position, thus causing a corresponding open-valve signal to be sent to the electronic control unit ECU.

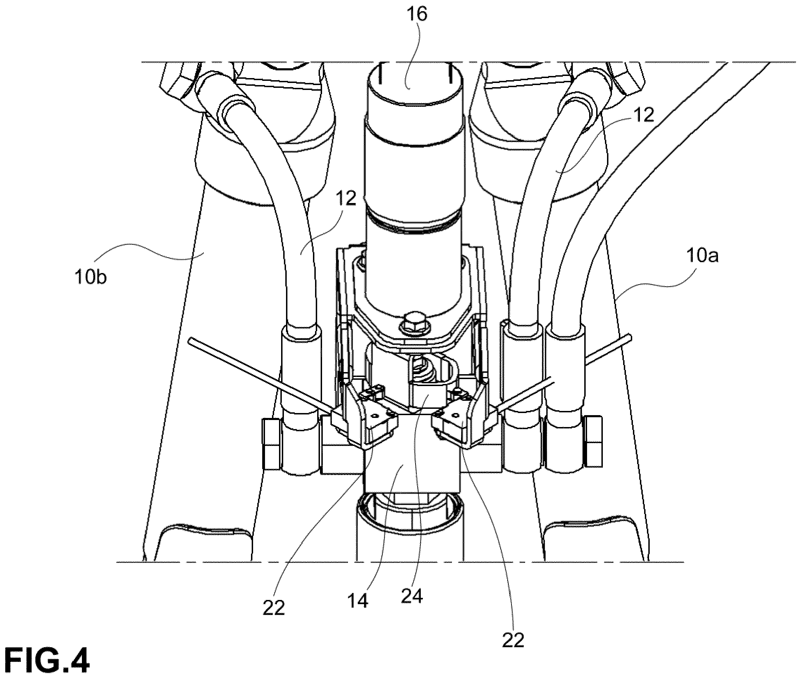

Figure 4, in which parts and elements identical or corresponding to those of Figure 3 are indicated with the same reference numbers, shows a further embodiment of the oscillating system object of the present invention.

This further embodiment differs from the one described above with reference to Figure 3 in that the electric motor 16 acts directly, rather than through the control cables 18, on the locking valve 14, since the shaft of the electric motor is connected by means of a joint to the shutter of the locking valve. Preferably, the cam 24 is in this case integrated in this connecting joint.

For the rest, what has already been explained above with regard to the embodiment of figure 3 applies.

Naturally, the principle of the invention remaining the same, the embodiments and details of construction may be widely varied with respect to what has been described and illustrated purely by way of non-limiting example, without thereby departing from the scope of the invention as defined in the attached claims.

## Claims

1. Hydraulic tilting system for a tilting vehicle with three or more wheels, comprising
a pair of hydraulic cylinders (10a, 10b),
a connection conduit (12) connecting respective working chambers of said pair of hydraulic cylinders (10a, 10b) with each other, and
a three-way locking valve (14) which is arranged along the connection conduit (12) and is switchable between an open position, in which it allows a working fluid to flow through the connection conduit (12) between said working chambers of the hydraulic cylinders (10a, 10b), thereby allowing tilting of the vehicle, and a closed position, in which it prevents the working fluid from flowing between said working chambers of the hydraulic cylinders (10a, 10b), thereby preventing tilting of the vehicle, the locking valve (14) being also configured to divert all or part of the flow of the working fluid from one of the hydraulic cylinders (10a, 10b) towards an auxiliary tank (15),
the hydraulic tilting system further comprising a motorized actuation device arranged to control shifting of the locking valve (14) between said open position and said closed position, the motorized actuation device comprising
an electric motor (16) operatively connected to the locking valve (14) to control shifting of the same between said open position and said closed position,
an electronic control unit (ECU) arranged to drive the electric motor (16) according to predetermined control logics, and
a control member (20) operable by the driver to send to the electronic control unit (ECU) a control signal indicative of the driver's intention to allow or prevent tilting of the vehicle.

2. System according to claim 1, wherein the electronic control unit (ECU) is arranged to check, upon receipt of the control signal provided by the driver through the control member (20), predetermined operating parameters of the vehicle and, based on said check, to drive the electric motor (16) so as to cause the locking valve (14) to shift from said open position to said closed position or vice versa.

3. System according to claim 2, wherein the electronic control unit (ECU) is arranged to prevent, when the vehicle is running, the locking valve (14) from shifting from said open position to said closed position, when the speed (v) of the vehicle is higher than a given first threshold value.

4. System according to claim 2 or claim 3, wherein the electronic control unit (ECU) is arranged to cause the locking valve (14) to shift from said closed position to said open position, in case the vehicle starts to move from an initial rest condition, as soon as the speed (v) of the vehicle is higher than a given second threshold value.

5. System according to claim 2 or claim 3, wherein the electronic control unit (ECU) is arranged to cause the locking valve (14) to shift from said closed position to said open position, in case the vehicle starts to move from an initial rest condition, as soon as a given opening degree (α) of the accelerator is overcome.

6. System according to any one of claims 2 to 5, wherein the electronic control unit (ECU) is arranged to prevent the locking valve (14) from shifting from said closed position to said open position, in case the parking brake of the vehicle is activated.

7. System according to any one of the preceding claims, wherein the electronic control unit (ECU) is configured to command the switching of the locking valve (14) in such a way as to make the working fluid to flow (partly or entirely) from the hydraulic cylinders (10a, 10b) to the auxiliary tank (15).

8. System according to any one of the preceding claims, wherein the motorized actuation device further comprises a pair of control cables (18) by means of which the electric motor (16) is arranged to act on a closure member of the locking valve (14) to cause shifting of the locking valve (14) between said open position and said closed position.

9. System according to any one of claims 1 to 7, wherein the electric motor (16) is directly coupled to a closure member of the locking valve (14), with no control cables interposed between the electric motor (16) and the closure member, to cause shifting of the locking valve (14) between said open position and said closed position.

10. System according to claim 8 or claim 9, wherein the motorized actuation device further comprises sensor means (22, 24) arranged to detect whether the locking valve (14) is in said open position or in said closed position and to send a corresponding signal to the electronic control unit (ECU), said sensor means (22, 24) comprising in particular a pair of micro-switches (22) each associated to a respective one of said open and closed positions of the locking valve (14), as well as a cam (24) coupled to the closure member of the locking valve (14) and cooperating with the micro-switches (22) so as to cause each time a respective micro-switch (22) to switch, and hence a corresponding signal to be sent to the electronic control unit (ECU), when the locking valve (14) takes said open position or said closed position.

11. Tilting vehicle with three or more wheels comprising a tilting system according to any one of the preceding claims.
